# FASCICULE DE BREVET EUROPEEN

(11) **EP 1 377 863 B1**
(45) Date de publication et mention de la délivrance du brevet: **29.09.2004**
(21) Numéro de dépôt: 02732811.1
(22) Date de dépôt: 11.04.2002
(51) Int. Cl.: G02B 7/182

(54) **DISPOSITIF DE MONTAGE ET DE CORRECTION DE LA POSITION D'UN MIROIR S'ETENDANT DANS L'OMBRE DU MIROIR ET SYSTEME OPTIQUE EQUIPE DE CE DISPOSITIF**
IN DEM SCHATTEN EINES SPIEGELS AUFGESTELLTES MONTAGE- UND JUSTIERGERÄT FÜR DIESEN SPIEGEL UND MIT DIESEM GERÄT VERSEHENES OPTISCHES SYSTEM
DEVICE FOR MOUNTING AND CORRECTING THE POSITION OF A MIRROR EXTENDING IN THE SHADOW OF THE MIRROR AND OPTICAL SYSTEM FITTED WITH SAID DEVICE

(30) Priorité: 13.04.2001 FR 0105109
(43) Date de publication de la demande: 07.01.2004
(73) Titulaire: Centre National d'Etudes Spatiales ( C.N.E.S.), 75039 Paris Cedex 01 (FR)
(72) Inventeur: CADIERGUES, Laurent, F-31500 Toulouse (FR)
(74) Mandataire: Cabinet BARRE LAFORGUE & associés
(86) Numéro de dépôt international: PCT/FR2002/001272
(87) Numéro de publication internationale: WO 2002/084361

(56) Documents cités:
- DE-A- 3 837 770
- FR-A- 2 773 890
- US-A- 5 461 515
- RADFORD S J E ET AL: "NUTATING SUBREFLECTOR FOR A MILLIMETER WAVE TELESCOPE" REVIEW OF SCIENTIFIC INSTRUMENTS, AMERICAN INSTITUTE OF PHYSICS. NEW YORK, US, vol. 61, no. 3, 1 mars 1990 (1990-03-01), pages 953-959, XP000104375 ISSN: 0034-6748
- BORTOLETTO F ET AL: "ACTIVE TELESCOPE SECONDARY MIRROR CONTROL SYSTEM" REVIEW OF SCIENTIFIC INSTRUMENTS, AMERICAN INSTITUTE OF PHYSICS. NEW YORK, US, vol. 70, no. 6, juin 1999 (1999-06), pages 2856-2860, XP000873352 ISSN: 0034-6748

## Description

L'invention concerne un dispositif de montage et de correction de la position d'un miroir s'étendant dans l'ombre de ce miroir. Elle s'étend à un système optique équipé d'un tel dispositif.

Certains systèmes optiques comportent un ou plusieurs miroirs masquant partiellement le flux lumineux incident et/ou le flux lumineux traversant le système optique. Tel est en particulier le cas d'un miroir secondaire d'un télescope à montage Cassegrain ou Newton. Dès lors, les dimensions radiales de ces miroirs doivent être aussi faibles que possibles, et les dispositifs nécessaires à leur montage ou à la correction de leur position dans le système optique doivent le moins possible masquer le flux lumineux incident résiduel (non masqué par le miroir) et principalement s'étendre dans l'ombre du miroir.

Par ailleurs, dans certaines applications, la position d'un tel miroir, essentielle au bon fonctionnement du système optique, doit pouvoir faire l'objet de réglages. Tel est en particulier le cas dans les systèmes optiques embarqués sur systèmes spatiaux (satellites, navettes, stations spatiales, sondes, lanceurs, ...) afin de parfaire leurs propriétés optiques qui peuvent se dégrader lors du lancement ou au cours du vol, notamment à cause des effets thermoélastiques.

FR-2.773.890 décrit ainsi un exemple de dispositif de montage et de correction de la position d'un miroir comprenant un mécanisme à actionneurs motorisés pouvant s'étendre dans l'ombre d'un miroir secondaire de télescope spatial.

Néanmoins, les dispositifs connus de montage et de correction s'étendant dans l'ombre des miroirs présentent l'inconvénient d'une commande complexe, non proportionnelle. Ainsi, la commande d'un déplacement en vue de corriger un défaut entraîne d'autres déplacements parasites, généralement qualifiés de "réjections" (de l'anglais "rejections") qui doivent ensuite être corrigés. Dès lors, la correction d'un défaut nécessite des degrés de liberté supplémentaires et un asservissement pour compenser les réjections. Par exemple, le dispositif de FR-2.773.890, permet d'effectuer des déplacements selon six degrés de liberté.

Il est à noter à cet égard que les réjections ne sont pas en général parallèles aux axes des actionneurs, de sorte que les compensations sont complexes et/ou peuvent nécessiter plusieurs étapes. Un asservissement électronique en boucle fermée, complexe, doit aussi être prévu pour réaliser cette compensation. De surcroît, l'élaboration du signal de commande est complexe, ce signal de commande n'étant pas proportionnel au déplacement à réaliser. Or, cette complexité grève le coût de développement et de fabrication des moyens (en général électroniques) de commande et en affecte la fiabilité de fonctionnement. Elle en augmente aussi considérablement l'encombrement, le poids et la consommation énergétique, ce qui constitue un inconvénient important dans certaines applications telles que les applications spatiales.

En outre, avec ces dispositifs connus, la position par défaut prise en l'absence d'alimentation des actionneurs, par exemple en cas de défaillance du système de commande, est éloignée de la position nominale mécanique de fonctionnement du système optique, ce qui affecte la fiabilité du dispositif, le fonctionnement du système optique étant dégradé (résolution diminuée) en cas de défaillance de l'électronique de commande, ce qui peut être rédhibitoire dans certaines applications.

L'invention vise donc à proposer un dispositif de montage et de correction de la position d'un miroir -notamment un miroir à symétrie axiale- s'étendant dans l'ombre du miroir, pouvant être piloté avec des moyens de commande simples, légers, peu encombrants et de faible consommation énergétique.

L'invention vise plus particulièrement à proposer un dispositif permettant d'effectuer des corrections de type linéaires, c'est-à-dire dont le signal de commande est proportionnel aux déplacements de correction à effectuer.

L'invention vise plus particulièrement à proposer un dispositif exempt de réjections non alignées aux axes des actionneurs, et notamment au moins sensiblement exempt de réfections latérales.

L'invention vise plus particulièrement à proposer un dispositif comprenant un nombre de degrés de liberté correspondant au nombre de mouvements de correction à réaliser en translation et/ou en rotation -notamment un dispositif apte à corriger la position du miroir en refocalisation (translation selon un axe de référence correspondant normalement à l'axe optique) et en tilt(s) (rotation(s) autour de l'un au moins de deux axes transversaux perpendiculaires à l'axe de référence et entre eux), à l'aide de trois degrés de liberté-.

L'invention vise plus particulièrement à proposer un dispositif qui soit compatible avec une utilisation à bord d'un système spatial tel qu'un satellite, une sonde, une station orbitale, une navette, un lanceur, ... et qui notamment puisse résister aux efforts de lancement et au vide spatial, être de faibles poids, encombrement et coûts de fabrication et d'utilisation (notamment en termes de consommation énergétique), présente une grande durée de vie, et permette des corrections de position du miroir fiables et précises, commandées à distance.

L'invention vise plus particulièrement à proposer un dispositif qui permette d'effectuer des corrections en position axiale (refocalisation) sur une course (dans chaque sens) de l'ordre de 50 µm à 100 µm avec une résolution inférieure à 0,1 µm, notamment de l'ordre de 0,05 µm, et en tilt(s) sur une course (dans chaque sens) de l'ordre de 500 µrad avec une résolution inférieure à 1 µrad, notamment de l'ordre de 0,5 µrad, et avec des réjections latérales inférieures à 1 µm.

L'invention vise aussi plus particulièrement à proposer un tel dispositif présentant des modes propres supérieurs à 195 Hz, une masse inférieure à 2,5 kg, et pouvant supporter un miroir de 3 kg sous 60 g d'accélération.

Pour ce faire, l'invention concerne un dispositif de montage et de correction de la position par rapport à un support d'un miroir présentant un axe optique central -notamment constituant un axe de symétrie du miroir- et un centre optique comprenant un mécanisme à actionneurs motorisés s'étendant dans l'ombre du miroir entre le support et une face postérieure du miroir, caractérisé en ce qu'il comprend un étage de correction en tilt(s) s'étendant entre deux plateaux, dont l'un, dit plateau miroir, est associé au miroir, tandis que l'autre, dit plateau support, est associé au support, cet étage de correction en tilt(s) comportant :
- au moins deux bielles rigides, dites bielles de liaison, reliant les deux plateaux, chacune de ces bielles de liaison étant fixée par une articulation de l'une de ses extrémités au plateau miroir et une autre articulation de son autre extrémité au plateau support, les bielles de liaison étant fixées auxdits plateaux de façon à s'étendre entre ces deux plateaux et, lorsque les deux plateaux sont dans une position relative, dite position nominale, dans laquelle l'axe optique central du miroir coïncide avec une direction fixe, dite axe de référence, avec les directions droites, dites axes de bielle, passant chacune par les deux articulations des extrémités de chaque bielle de liaison qui sont sécantes au moins sensiblement au centre optique du miroir,
- au moins un actionneur linéaire, dit actionneur de tilt, interposé entre les deux plateaux et fixé par une articulation de l'une de ses extrémités au plateau miroir et par une autre articulation de son autre extrémité au plateau support, chaque actionneur de tilt étant fixé aux plateaux et étant adapté pour que, lorsqu'au moins un actionneur de tilt est activé, la distance entre ses extrémités étant modifiée, le plateau miroir s'incline par rapport au plateau support, le miroir pivotant au moins sensiblement autour de son centre optique.

L'inventeur a en effet démontré qu'un tel dispositif présente une cinématique de fonctionnement particulière dans laquelle les réjections à composante latérale imparties par une correction en tilt(s) sont extrêmement faibles et en fait négligeables. En effet, on peut démontrer que la trajectoire suivie par le centre optique du miroir suite aux corrections en tilt(s) présente un point de rebroussement correspondant à la position neutre initiale de ce centre optique (dans laquelle les bielles de liaison sont symétriques par rapport à l'axe optique du miroir, les deux plateaux étant en position nominale, parallèles entre eux avec une tangente en ce point de rebroussement coïncidant avec l'axe de référence (et avec l'axe optique central du miroir). De ce fait, le signal commande de chaque actionneur de tilt peut être proportionnel au déplacement à réaliser, et il en résulte une simplification considérable du dispositif lui-même et de ses moyens de commande.

Il est à noter que DE-3837770 décrit un dispositif de positionnement d'un miroir auxiliaire de télescope permettant de réaliser des mouvements de « hachage » alternatif de forte accélération, sans électro-aimant ni rappel élastique, pour orienter l'axe optique du télescope sur une zone du ciel entourant une étoile à observer dans les infrarouges, afin de pouvoir supprimer le bruit de fond du signal par soustraction. La solution préconisée dans ce document consiste à utiliser un système oléodynamique comprenant des vérins hydrauliques parallèles à l'axe optique du miroir, fixés entre une plaque de base et le miroir ; des vérins hydrauliques de contrôle de position dont les axes passent par le centre de gravité du miroir dont la rotation est effectuée autour de ce centre de gravité ; des paires de bras articulés s'étendant axialement parallèlement à l'axe optique entre la plaque de base et le miroir pour réaliser un blocage en rotation autour de l'axe optique ; des vérins hydrauliques s'étendant également entre la plaque de base et le miroir pour permettre de modifier la forme de ce miroir en vue de compenser les éventuelles déformations résultant de ces mouvements. Dans ce document, le miroir est pivoté autour de son centre de gravité, ce qui ne permet pas de résoudre les problèmes mentionnés ci-dessus.

La publication « nutating subreflector for a millimeter wave telescope » RADFORD SJE and al. American Review of Physics - New York - US - vol. 61 - n° 3 - 1er mars 1990 - p. 953-959 décrit également un dispositif qui permet de réaliser des mouvements de nutation afin de supprimer le bruit de fond dans le cadre d'une observation infrarouge. Le dispositif prévu comprend deux moteurs électriques à tiges d'actionnement mobiles en translation parallèlement à l'axe optique du miroir, de chaque côté. Les deux moteurs sont montés sur des bras pivotant selon un axe de pivotement parallèle à l'axe de pivotement du miroir. On obtient ainsi une structure assimilable à un parallélogramme déformable avec lequel le miroir n'est pas pivoté autour de son centre optique. Un système de commande en boucle fermée particulièrement complexe doit être prévu. Là encore, ce document ne permet pas de résoudre les problèmes mentionnés ci-dessus.

Dans tout le texte, par "plateau", on désigne toute pièce rigide s'étendant au moins orthogonalement à l'axe optique central du miroir et dans l'ombre du miroir. Le plateau miroir est "associé" au miroir, c'est-à-dire qu'il est formé d'une pièce distincte fixée au miroir, par exemple par des vis, ou est formé d'une portion postérieure du miroir.

Les plateaux sont de préférence plans (le plateau miroir étant orthogonal à l'axe optique central et le plateau support étant orthogonal à l'axe de référence), mais d'autres formes de réalisation sont possibles. Toutes les articulations des différentes bielles de liaison à un même plateau sont de préférence situées dans un même plan orthogonal à l'axe de référence, mais d'autres formes de réalisation sont possibles. Dans l'un et/ou l'autre de ces modes de réalisation préférentiels, l'axe de référence coïncide avec l'axe optique central du miroir lorsque les deux plateaux et/ou les deux plans définis par les articulations, des bielles de liaison (ou plateau miroir et, respectivement, au plateau support) sont parallèles entre eux, en position nominale. L'axe de référence, fixe et défini par rapport au support, correspond donc à une position nominale de l'axe optique central du miroir dans laquelle le système optique contenant le miroir est normalement réglé et opérationnel.

Avantageusement et selon l'invention, les bielles de liaison sont articulées au voisinage de la périphérie du plateau support. Les bielles de liaison s'étendent donc à partir du plateau support vers le plateau miroir incliné vers l'axe de référence et vers l'axe optique central du miroir, leurs articulations sur le plateau miroir étant plus proches les unes des autres et de l'axe optique central que ne le sont leurs articulations sur le plateau support entre elles et de l'axe de référence. De préférence, avantageusement et selon l'invention, chaque bielle de liaison est une tige droite rigide. D'autres formes de réalisation sont possibles.

A l'inverse, avantageusement et selon l'invention, chaque actionneur de tilt est articulé au voisinage de la périphérie du plateau miroir. Les actionneurs de tilt s'étendent donc à partir du plateau miroir vers le plateau support incliné vers l'axe de référence et vers l'axe optique central du miroir, leurs articulations sur le plateau support étant plus proches les unes des autres et de l'axe de référence que ne le sont leurs articulations sur le plateau miroir entre elles et de l'axe optique central. Cette inclinaison permet de rapprocher l'axe dit axe d'actionneur, passant par les deux extrémités de chaque actionneur de tilt, de la tangente à la trajectoire de déplacement de son articulation sur le plateau miroir, au bénéfice d'une meilleure efficacité et d'un meilleur rendement mécanique.

Le dispositif selon l'invention peut être utilisé pour la correction en tilt autour d'un seul axe perpendiculaire à l'axe de référence (l'étage de correction en tilt ne présentant qu'un seul degré de liberté), le plateau miroir pivotant dans un plan fixe radial contenant à l'axe de référence. Dans cette variante, l'étage de tilt peut ne comporter que deux bielles de liaison et un seul actionneur de tilt situé dans ce plan radial.

Dans une autre variante d'application, le dispositif selon l'invention permet toute correction de tilt, l'étage de correction en tilt(s) présentant deux degrés de liberté. Avantageusement et selon l'invention, il comprend trois bielles de liaison uniformément réparties autour de l'axe de référence et de l'axe optique central. Les articulations des bielles de liaison au plateau support sont réparties uniformément à 120° les unes des autres autour de l'axe de référence et les articulations des bielles de liaison au plateau miroir sont réparties uniformément à 120° les unes des autres autour de l'axe optique central.

Dans cette variante, avantageusement et selon l'invention, le dispositif comprend au moins deux actionneurs de tilt disposés de telle sorte que les axes, dits axes d'actionneurs, passant chacun par les deux articulations d'extrémité d'un actionneur de tilt et l'axe de référence ne soient pas coplanaires. Si deux actionneurs seulement sont prévus, ils sont de préférence de type double effet et orientés dans des plans radiaux orthogonaux contenant l'axe de référence.

Dans un autre mode de réalisation avantageux et selon l'invention, le dispositif comprend trois actionneurs de tilt uniformément répartis autour de l'axe de référence. Les trois actionneurs de tilt sont à 120° les uns des autres, c'est-à-dire orientés dans des plans radiaux contenant l'axe de référence et à 120° les uns des autres en position nominale. Leurs articulations au plateau miroir sont réparties uniformément à 120° les unes des autres. Leurs articulations au plateau support sont réparties uniformément à 120° les unes des autres. Avantageusement et selon l'invention, les trois actionneurs de tilt sont disposés entre les trois bielles de liaison, chaque actionneur de tilt étant interposé entre deux bielles de liaison au moins sensiblement à égale distance de ces deux bielles de liaison adjacentes. Le dispositif présente ainsi une bonne symétrie et un bon équilibrage dans l'espace.

Dans ce mode de réalisation notamment, avantageusement et selon l'invention, chaque actionneur de tilt est un actionneur simple effet moteur dans un sens de translation par rapport à l'axe d'actionneur et comprend des moyens de rappel élastique dans l'autre sens de translation. Avantageusement et selon l'invention, chaque actionneur de tilt est moteur dans le sens du rapprochement de ses deux extrémités d'articulation.

Par ailleurs, avantageusement et selon l'invention, chaque actionneur de tilt est un actionneur piézoélectrique à déplacement amplifié sans jeu (à élément(s) piézoélectrique(s) précontraint(s)) comme par exemple décrit par FR-2.740.276. D'autres types d'actionneurs à commande électrique, mécanique (vis/écrous), thermique (dilatation thermique), ... peuvent être utilisés dans un dispositif selon l'invention. Dans tous les cas, le signal de commande est simple à élaborer, car proportionnel au déplacement souhaité.

Avantageusement et selon l'invention, les articulations de chaque bielle de liaison aux plateaux sont de types joints de cardan autorisant des pivotements de modification d'inclinaison de l'axe de bielle par rapport aux plateaux mais interdisant des rotations relatives autour de l'axe de bielle. Autrement dit, chaque bielle de liaison est solidaire en rotation autour de son axe de bielle (direction passant par ses deux articulations d'extrémité) par rapport à chacun des deux plateaux. De tels joints de cardan (ou joints homocinétiques) peuvent être réalisés par des pièces dotées de fentes et/ou formes appropriées usinées dans la masse, de façon à être élastiques en flexion mais rigides en torsion, et exempts de frottements dynamiques.

De même, avantageusement et selon l'invention, les articulations de chaque actionneur de tilt aux plateaux sont de types joints de cardan autorisant des pivotements de modification d'inclinaison de l'axe d'actionneur par rapport aux plateaux, mais interdisant des rotations relatives autour de l'axe d'actionneur. Chaque actionneur de tilt est donc aussi solidaire en rotation autour de son axe d'actionneur par rapport à chacun des deux plateaux.

L'emploi de tels joints de cardan pour les articulations de bielles de liaison et/ou des actionneurs de tilt confère une stabilité en torsion autour de l'axe de référence entre les deux plateaux.

Par ailleurs, avantageusement et selon l'invention, le dispositif comprend en outre un étage, dit étage de refocalisation, de correction de la position plateau support en translation le long de l'axe de référence et/ou en translation perpendiculairement à cet axe de référence. Avantageusement et selon l'invention, l'étage de refocalisation étant interposé entre le support et le plateau support de l'étage de correction en tilt(s), une correction en refocalisation n'entraîne par de réfections latérales par rapport à l'axe de référence.

Avantageusement et selon l'invention, l'étage de refocalisation est adapté pour n'autoriser qu'une translation du plateau support le long de l'axe de référence. Dans le cas où l'étage de correction en tilt présente deux degrés de liberté (trois bielles de liaison), le dispositif selon l'invention constitué de l'étage de refocalisation et de l'étage de correction en tilt(s) présente trois degrés de liberté et permet les corrections en position axiale et en tilt(s). Avantageusement et selon l'invention, l'étage de refocalisation comprend au moins un actionneur linéaire, dit actionneur de refocalisation, s'étendant parallèlement à l'axe de référence entre le plateau support et le support.

Dans une variante et selon l'invention, l'étage de refocalisation peut présenter plusieurs degrés de liberté. Ainsi, avantageusement et selon l'invention, l'étage de refocalisation comprend plusieurs actionneurs de refocalisation aptes à réaliser des translations selon des directions parallèles à l'axe de référence mais non confondues à cet axe de référence, de façon à permettre des translations du plateau support perpendiculairement à l'axe de référence. Avantageusement et selon l'invention, il comprend trois actionneurs de refocalisation régulièrement répartis autour de l'axe de référence. Dans ce cas, l'étage de refocalisation présente trois degrés de liberté. Le dispositif selon l'invention peut alors présenter cinq degrés de liberté (l'étage de correction en tilt(s) ayant deux degrés de liberté). Dans cette variante, la commande n'est pas strictement proportionnelle puisque l'étage de correction en tilt doit compenser le déplacement en tilt induit par l'étage de refocalisation. Néanmoins, elle reste proportionnelle dans le cas de déplacements en refocalisation et en tilts.

L'invention s'étend à un système optique -notamment un télescope spatial à montage Cassegrain ou à montage Newton, et notamment destiné à être embarqué à bord d'un système spatial- comprenant au moins un miroir à axe optique central et centre optique -notamment un miroir secondaire- et au moins un support d'un tel miroir, caractérisé en ce qu'il comprend au moins un dispositif selon l'invention de montage et de correction de la position d'un miroir par rapport à un support.

Avantageusement et selon l'invention, le système optique comprend un dispositif selon l'invention pour chaque miroir, dit miroir secondaire, masquant au moins partiellement le flux lumineux incident sur le système optique et/ou le flux lumineux traversant le système optique.

L'invention concerne aussi un dispositif de montage et de correction de la position d'un miroir, et un système optique caractérisés en combinaison par tout ou partie des caractéristiques mentionnées ci-dessous ou ci-après.

D'autres buts, caractéristiques et avantages de l'invention apparaissent à la lecture de la description suivante de ses modes de réalisation préférentiels donnés à titre d'exemples non limitatifs et qui se réfèrent aux figures annexées dans lesquelles :
- la figure 1 est un schéma en coupe axiale illustrant un télescope à montage Cassegrain selon l'invention comprenant un dispositif selon l'invention de montage et de correction de position du miroir secondaire,
- les figures 2a et 2b sont des schémas de principe, en position nominale et, respectivement, en une position autre que nominale, d'une variante d'un étage de correction en tilt dans un plan radial, à un degré de liberté, illustrant le principe d'un dispositif selon l'invention,
- la figure 3 est une vue en coupe axiale d'un premier mode de réalisation préférentiel d'un dispositif selon l'invention,
- la figure 4 est une vue axiale du dispositif selon l'invention selon la flèche F de la figure 3, représenté sans le plateau miroir ni la potence centrale à des fins d'illustration,
- la figure 5 est une vue en coupe axiale d'une articulation d'extrémité d'une bielle de liaison ou d'un actionneur de tilt de l'étage de correction en tilt(s) du dispositif selon l'invention de la figure 3,
- la figure 6 est une vue en coupe selon la ligne VI-VI de la figure 5,
- la figure 7 est une vue de profil schématique d'un deuxième mode de réalisation d'un dispositif selon l'invention,
- la figure 8 est une vue schématique en coupe selon la ligne VIII-VIII de la figure 7,
- les figures 9 à 12 sont des diagrammes illustrant des résultats d'un exemple de simulation du dispositif selon l'invention des figures 3 et 4 et représentant respectivement les courses des actionneurs de tilt, la course de tilt du miroir, la réjection latérale, et la réjection axiale.

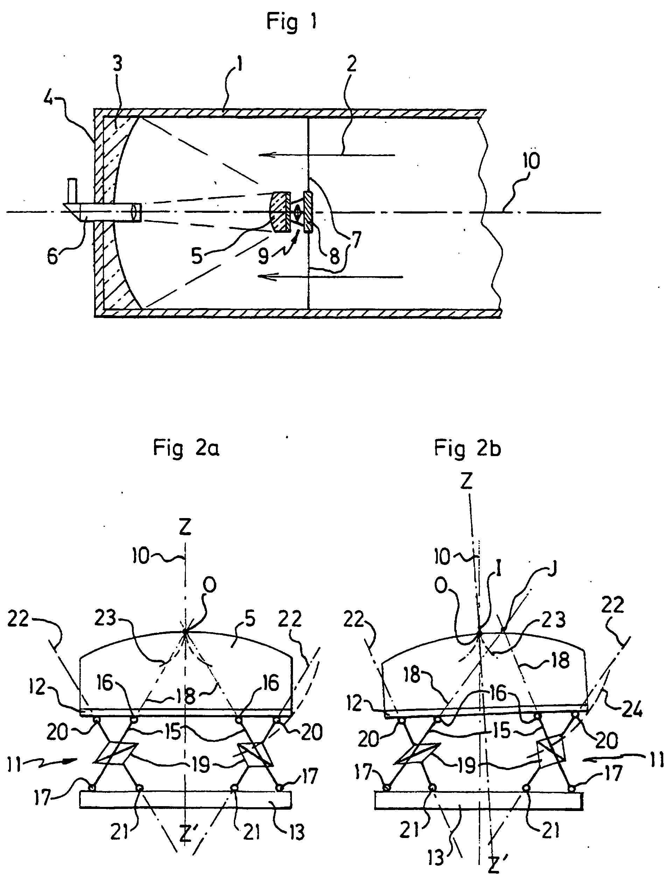

La figure 1 est un schéma de principe d'un télescope à montage Cassegrain selon l'invention comprenant un fût cylindrique 1 destiné à être fixé, par l'intermédiaire d'une monture (non représentée) à une structure fixe d'un système spatial tel qu'un satellite, ou sur une structure fixe terrestre. Un miroir parabolique principal 3 concave est fixé à l'extrémité 4 du fût 1 opposé à l'ouverture d'entrée du télescope (non représentée). Un miroir secondaire 5 parabolique convexe à symétrie axiale réfléchit la lumière issue du miroir principal 3 vers un oculaire 6 traversant le miroir principal 3 en son centre. Le miroir secondaire 5 est fixé au fût 1 par des tiges ou câbles 7 s'étendant radialement, aussi fins que possible, de façon à ne pas interférer avec le flux lumineux incident 2. Les tiges ou câbles 7 maintiennent un support 8 en forme générale de flasque, en position centrale du fût 1, c'est-à-dire centré axialement sur son axe principal 10 (qui constitue l'axe de référence 10 du télescope) et s'étendant orthogonalement à cet axe principal.

Le miroir secondaire 5 est monté par rapport au support 8 par l'intermédiaire d'un dispositif 9 de montage et de correction de position selon l'invention. Comme on le voit figure 1, ce dispositif 9 est situé dans l'ombre du miroir 5, c'est-à-dire, n'interfère ni avec le flux lumineux incident 2 qui passe autour du miroir secondaire 5, ni avec le flux lumineux réfléchi du miroir principal 3 incident sur le miroir secondaire 5, ni avec le flux lumineux réfléchi par le miroir secondaire 5 vers l'oculaire 6. En pratique, cela signifie que le dispositif 9 est situé intégralement à l'intérieur du cylindre de révolution imaginaire qui prolonge le miroir secondaire 5 axialement à l'opposé du miroir principal 3. Le support 8 s'étend aussi dans l'ombre du miroir 5.

Le miroir secondaire 5 présente un centre optique O, et un axe optique central ZZ' qui est son axe de symétrie. En position nominale du miroir secondaire 5, le centre optique O doit être sur l'axe de symétrie 10 du fût 1, et l'axe optique central ZZ' du miroir 5 doit coïncider avec cet axe 10 de symétrie du fût 1. Le dispositif 9 selon l'invention comprend un étage 11 de correction en tilt(s) permettant d'ajuster la position angulaire de l'axe optique central ZZ' du miroir secondaire 5 par rapport à l'axe de symétrie 10 et par pivotement autour du centre optique O. Autrement dit, l'étage 11 de correction en tilt(s) a pour fonction d'ajuster la position du miroir secondaire 5 par pivotement autour de tout axe de pivotement orthogonal à l'axe de symétrie 10 et passant par le centre optique O.

L'étage 11 de correction en tilt(s) s'étend entre deux plateaux dont l'un, dit plateau miroir 12 est associé à une face postérieure 34 du miroir secondaire 5, tandis que l'autre, dit plateau support 13 est associé au support 8 par l'intermédiaire d'un étage, dit étage de refocalisation 14 permettant d'ajuster la position du centre optique O du miroir secondaire 5 le long de l'axe de symétrie 10 de référence. Les deux plateaux 12, 13 s'étendent dans l'ombre du miroir secondaire 5. Il en va de même de l'étage de refocalisation 14. Le dispositif 9 selon l'invention s'étend dans l'ombre du miroir 5, entre sa face postérieure 34 et le support 8, également dans l'ombre du miroir 5.

Les figures 2a et 2b sont des schémas de principe permettant de comprendre la cinématique générale d'un étage 11 de correction en tilt(s) d'un dispositif 9 selon l'invention.

Il est à noter que l'invention est de préférence applicable pour réaliser une correction en tilt(s) selon tout axe de pivotement orthogonal à l'axe 10 de référence passant par le centre optique O. Elle peut aussi être appliquée pour ne réaliser cette correction que selon un seul axe de pivotement, c'est-à-dire dans un seul plan radial à l'axe 10. Les figures 2a et 2b illustrent une correction en tilt effectuée dans un seul plan radial, qui correspond à celui des figures. Dans cette situation, l'étage 11 comprend deux bielles rigides 15, dites bielles de liaison 15, reliant les deux plateaux 12, 13, chacune de ces bielles de liaison 15 étant fixée par une articulation 16 de l'une de ses extrémités au plateau miroir 12 et par une autre articulation 17 de son autre extrémité au plateau support 13. Les articulations 17 des bielles de liaison 15 au plateau support 13 sont à égale distance de l'axe de référence 10. Les bielles de liaison 15 sont fixées aux deux plateaux 12, 13 de façon à s'étendre entre ces deux plateaux 12, 13 et, lorsque les plateaux 12, 13 sont dans la position nominale représentée figure 2a où l'axe optique ZZ' du miroir 5 coïncide avec l'axe 10 de référence, avec les directions droites, dites axe de bielle 18 (qui sont celles passant chacune par les deux articulations 16, 17 d'extrémité de chaque bielle de liaison 15) qui sont sécantes au centre optique O du miroir 5. Les axes de bielle 18 sont tous sécants en un point d'intersection unique J qui, en position nominale, coïncide avec le centre optique O du miroir 5 et est donc situé sur l'axe de référence 10. Les axes de bielle 18 ont la même inclinaison angulaire par rapport à l'axe de référence 10 en position nominale. Dans cette position nominale, les axes de bielle 18 (et les bielles de liaison 15) sont symétriques par rapport à l'axe de référence 10 (dans la variante des figures 2a, 2b). Sur les figures 2a, 2b, les bielles de liaison 15 sont représentées sous forme de simples tiges rigides s'étendant selon leur axe de bielle 18. Il est clair néanmoins que les bielles de liaison 15 peuvent présenter toutes autres formes sinueuses ou tourmentées, dès lors qu'elles sont rigides, c'est-à-dire que les deux articulations 16, 17 d'extrémité de chaque bielle 15 restent reliées rigidement l'une à l'autre par l'intermédiaire de la bielle de liaison 15.

L'étage 11 de correction en tilt(s) comprend en outre au moins un actionneur linéaire, dit actionneur de tilt 19, motorisé, interposé entre les deux plateaux 12, 13 et fixé par une articulation 20 de l'une de ses extrémités au plateau miroir 12 et par une autre articulation 21 de son autre extrémité au plateau support 13. Lorsqu'un tel actionneur linéaire 19 est activé, la distance entre les deux articulations 20, 21 est modifiée par translation relative de ses articulations 20, 21 selon une direction fixe, dite axe d'actionneur 22. Chaque actionneur linéaire 19 est fixé aux deux plateaux 12, 13 et est adapté pour que, lorsqu'il est activé, le plateau miroir 12 s'incline par rapport au plateau support 13. Les articulations 20 des actionneurs de tilt 19 au plateau miroir 12 sont à égale distance de l'axe optique central ZZ' du miroir 5. Les articulations 21 des actionneurs de tilt 19 au plateau support 13 sont à égale distance de l'axe de référence 10. En position nominale, les axes d'actionneur 22 ont la même inclinaison angulaire par rapport à l'axe de référence 10.

Du fait que les bielles de liaison 15 sont sécantes au centre optique O, lorsque le plateau miroir 12 s'incline par rapport au plateau support 13, le miroir secondaire 5 pivote au moins sensiblement autour de son centre optique O. En effet, on peut démontrer que la trajectoire théorique du centre optique O dans cette cinématique au cours des pivotements relatifs des plateaux 12, 13 présente en fait un point de rebroussement I situé sur l'axe 10 de référence et une tangente au point de rebroussement I qui coïncide à l'axe de référence 10. Le point de rebroussement I coïncide au centre optique O du miroir 5 lorsque les deux plateaux 12, 13 sont en position nominale parallèles entre eux, c'est-à-dire lorsque les articulations 16, 17, 20, 21 sont dans une position telle que le miroir 5 a une position angulaire correcte (globalement orthogonale) par rapport à l'axe 10 de référence, et que le point d'intersection J des axes de bielle 18 est sur l'axe de référence 10.

La figure 2b représente une position non nominale dans laquelle l'axe optique ZZ' du miroir 5 est décalé angulairement par rapport à l'axe de référence 10. Le centre optique O s'est décalé sur sa trajectoire 23 et est donc distinct du point de rebroussement I de cette trajectoire 23. Néanmoins, du fait de la forme de cette trajectoire 23 au point de rebroussement I, le centre optique O ne s'est déplacé latéralement (selon une direction radiale à l'axe 10 de référence) que de façon parfaitement négligeable, et extrêmement légèrement le long de l'axe 10 de référence. On peut donc considérer que le miroir 5 a en fait pivoté autour du centre optique O. Il est à noter que les axes de bielle 18 sont alors sécants en un point J qui ne coïncide plus avec le centre optique O du miroir 5 et n'est plus sur l'axe de référence 10 ni sur l'axe optique central ZZ' du miroir 5. Pour pouvoir être sécantes au centre optique O en position nominale, les bielles de liaison 15 sont articulées au voisinage de la périphérie du plateau support 13. Autrement dit les articulations 17 des bielles de liaison 15 au plateau support 13 sont éloignées radialement les unes des autres d'une distance supérieure à la distance séparant les articulations 16 des bielles de liaison 15 au plateau miroir 12 les unes des autres, de sorte que les axes de bielle 18 puissent être inclinés et se rejoindre au centre optique O en position nominale.

A l'inverse, chaque actionneur de tilt 19 est articulé au voisinage de la périphérie du plateau miroir 12, et son articulation 20 au plateau miroir 12 est plus éloignée de l'axe 10 de référence que ne l'est son articulation 21 au plateau support 13. L'axe d'actionneur 22 doit être positionné de façon à être le plus proche possible de la tangente à la trajectoire circulaire 24 parcourue par l'articulation 20 de l'actionneur de tilt 19 au plateau miroir 12 au cours du pivotement du plateau miroir 12 telle qu'imposée par la cinématique des bielles de liaison 15. En effet, dans cette position de l'axe d'actionneur 22, l'actionneur 19 présente le plus d'efficacité, l'effort exercé étant au moins sensiblement perpendiculaire au bras de levier défini entre l'articulation 20 où cet effort s'exerce et le centre optique O du miroir 5 qui est le centre de rotation.

Avec le principe cinématique illustré aux figures 2a, 2b, pour un miroir de 100 mm de hauteur, la valeur maximum de correction en tilt obtenue par modélisation (en supposant la raideur de bielles 15 infinie et les articulations parfaites) est de 1 350 rad, avec des réfections latérales limitées à 0,0001 µm et des réjections axiales limitées à 0,25 µm.

Si l'on utilise des actionneurs de tilt 19 du type double effet, c'est-à-dire susceptibles d'être moteur dans les deux sens de translation selon l'axe d'actionneur 22, un seul actionneur de tilt 19 serait suffisant pour faire pivoter le miroir 5 dans un plan radial dans un sens et dans l'autre. Sur les figures 2a et 2b, on a néanmoins représenté un mode de réalisation où les actionneurs de tilt 19 sont de type simple effet, c'est-à-dire moteurs dans un unique sens de translation par rapport à l'axe d'actionneur 22 -notamment dans le sens du rapprochement de ses deux extrémités d'articulation (20, 21)- et comprend des moyens de rappel élastique dans l'autre sens de translation, c'est-à-dire dans le sens de l'écartement relatif de ses deux extrémités d'articulation (20, 21). Chaque actionneur de tilt 19 est de préférence un actionneur piézoélectrique à déplacement amplifié sans jeu, à élément(s) piézoélectrique(s) étant précontraint(s) tel que décrit par exemple dans le brevet FR-2.740.276 ou dans US-3.274.537. Un tel actionneur piézoélectrique comprend une structure mécanique d'amplification 25, par exemple de forme globalement elliptique ou polygonale définissant deux arcs flexibles élastiques opposés et un dispositif piézoélectrique 26 s'étendant entre les deux arcs de la structure 25. La structure 25 présente un grand axe et le dispositif piézoélectrique 26 s'étend selon le grand axe de cette structure 25. Lorsque le dispositif piézoélectrique 26 est alimenté, sa longueur augmente, de sorte que le grand axe de la structure 25 augmente et que son petit axe (perpendiculaire au grand axe) diminue de longueur. Les articulations 20, 21 sont associées à chacun des arcs de la structure 25 selon le petit axe de la structure 25. Lorsque le dispositif piézoélectrique 26 n'est plus alimenté, la structure 25 revient à sa position de repos par élasticité en flexion des arcs. De même, il est à noter que la structure 25 peut être légèrement en extension par rapport à sa position de repos, c'est-à-dire avec le petit axe qui augmente de longueur, le dispositif piézoélectrique 26 étant comprimé, et ce sous l'effet d'un effort de traction exercé entre les deux articulations 20, 21. Lorsque cet effort de traction cesse, la structure 25 reprend sa position de repos initiale. La structure 25 constitue donc des moyens de rappel élastique des articulations 20, 21 dans une position de repos. Un tel actionneur piézoélectrique 19 présente de nombreux avantages : il est compatible avec une utilisation à bord d'un engin spatial (peut supporter de fortes accélérations, des conditions de vide extrêmes est exempt de pièces en frottement dynamique relatif, et présente une très grande durée de vie), il permet d'exercer des efforts relativement importants (de 100 à 1500 Newtons) pour un poids faible (de l'ordre de 150 à 200 g) et avec des courses faibles (de l'ordre de 50 à 200 µm). A titre d'exemple, on peut utiliser un actionneur référence APA120ML commercialisé par la société CEDRAT RECHERCHE (FRANCE).

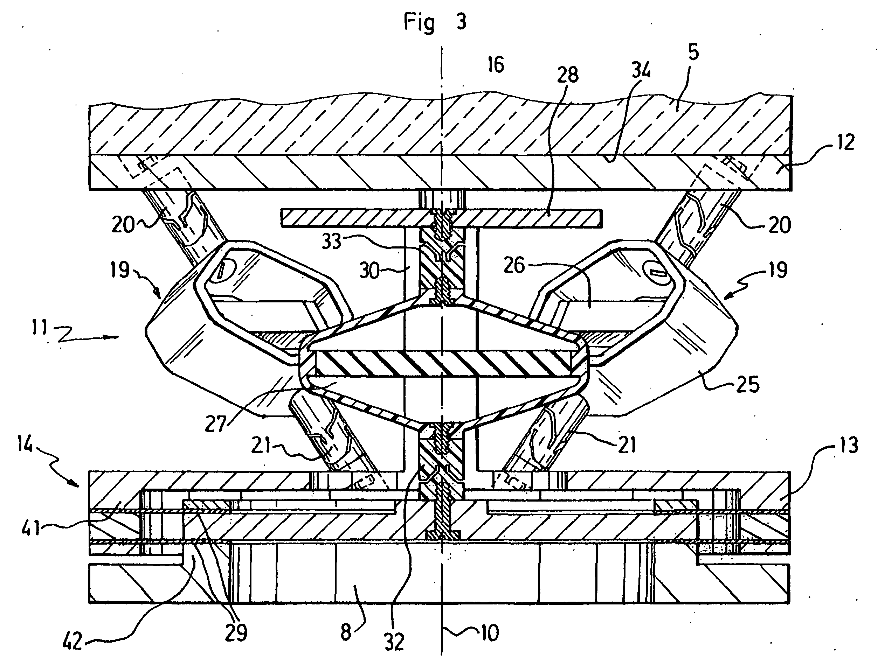

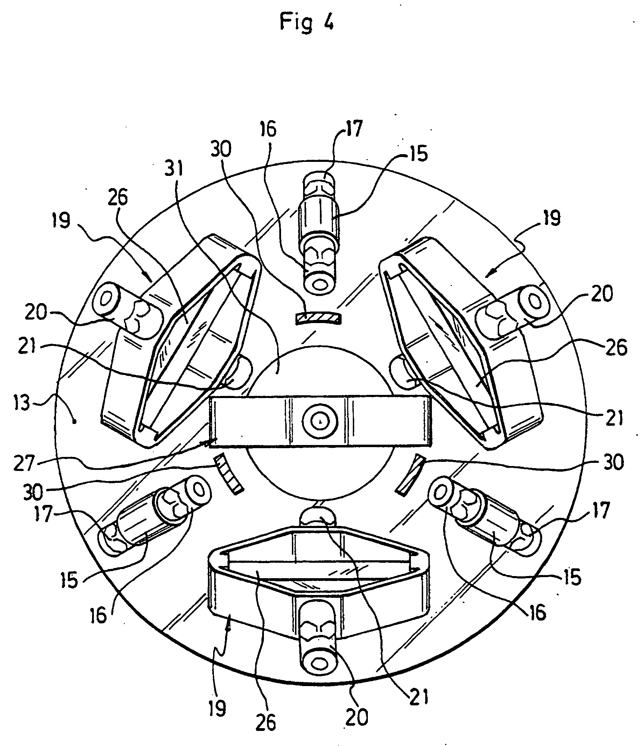

De préférence, le dispositif selon l'invention (figures 3 et 4) permet une correction en tilt selon toute direction de l'espace, c'est-à-dire selon tout plan radial de l'axe 10 de référence. Pour ce faire, le dispositif comprend trois bielles rigides 15 uniformément réparties autour de l'axe de référence 10 et de l'axe optique central ZZ'. En outre, le dispositif comprend au moins deux actionneurs de tilt 19 disposés de telle sorte que les axes d'actionneur 22 et l'axe 10 de référence ne soient pas coplanaires.

Deux actionneurs de tilt 19 suffisent pour réaliser tous les mouvements de pivotement si ces actionneurs de tilt 19 sont de type à double effet. En utilisant des actionneurs de tilt 19 simple effet tels que décrits ci-dessus, le dispositif comprend trois actionneurs de tilt 19 uniformément répartis autour de l'axe 10 de référence comme représenté figures 3 et 4. Les trois actionneurs de tilt 19 peuvent être disposés entre les trois bielles de liaison 15, chaque actionneur de tilt 19 étant interposé entre deux bielles de liaison 15 au moins sensiblement à égale distance de ces bielles de liaison adjacentes (figure 4).

Les bielles de liaison 15 ont la même inclinaison par rapport à l'axe de référence 10 en position nominale. Il en va de même des actionneurs de tilt 19. Là encore, les axes de bielle 18 sont sécants en un point unique J qui, en position nominale où il est sur l'axe de référence 10, coïncide avec le centre optique 0 du miroir 5.

Lors de chaque pivotement en tilt, une cinématique équivalente à celle représentée figures 2a, 2b se retrouve dans un plan radial. Néanmoins, seul un actionneur de tilt 19 et la bielle de liaison opposée sont dans ce même plan radial. La trajectoire possible du centre optique O du miroir est donc, de façon générale, une surface ayant un point de rebroussement I sur l'axe de référence 10 et une tangente en ce point de rebroussement I coïncidant avec l'axe de référence 10. Dès lors, les réjections latérales induites sont négligeables et la réjection axiale est faible.

Avantageusement et selon l'invention, l'étage 11 de correction en tilt(s) maintient les deux plateaux 12, 13 l'un par rapport à l'autre en empêchant leur rotation relative (en torsion) autour de l'axe 10 de référence. Pour ce faire, les articulations 16, 17 de chaque bielle de liaison 15 au plateau 12, 13 sont du type joint de cardan autorisant les pivotements de modification d'inclinaison de l'axe de bielle 18 par rapport aux plateaux 12, 13, mais interdisant de rotations relatives propres (torsion) autour de l'axe de bielle 18. Autrement dit, les deux articulations d'extrémité 16, 17 d'une bielle de liaison 15 sont solidaires en rotation propre autour de l'axe de bielle 18 l'une de l'autre. Par contre, ces articulations 16, 17 permettent des modifications d'inclinaison de l'axe de bielle 18 par rapport à chacun des plateaux 12, 13. De même, les articulations 20, 21 de chaque actionneur de tilt 19 aux plateaux 12, 13 sont de type à joint de cardan autorisant des modifications d'inclinaison de l'axe actionneur 22 par rapport à chacun des plateaux 12, 13, mais interdisant des rotations relatives propres (torsion) autour de l'axe d'actionneur 22.

De préférence, les articulations 16, 17 des bielles de liaison 15 sont choisies avec une raideur axiale de l'ordre ou supérieure à 200 N/µm, une raideur angulaire de 20 à 60 Nm/rad -notamment de l'ordre de 40 Nm/rad- par une course de 0,1° à 1° -notamment de l'ordre de 0,5°- dans chaque sens. Les articulations 20, 21 des actionneurs de tilt 19 sont choisies avec une raideur axiale de l'ordre de ou supérieure à 100 N/µm, une raideur angulaire de 10 à 40 Nm/rad -notamment de l'ordre de 22 Nm/rad- pour une course de 0,1° à 1° -notamment de l'ordre de 0,5°- dans chaque sens. Les articulations 16, 17 des bielles de liaison 15 présentent la même course d'inclinaison angulaire mais sont plus raides axialement et en flexion que les articulations 20, 21 des actionneurs de tilt 19. En effet, ce sont essentiellement les bielles de liaison 15 qui imposent la cinématique et supportent les contraintes.

De telles articulations 16, 17, 20, 21 de type joint de cardan peuvent être réalisées par exemple par des liaisons flexibles formées de blocs d'acier fendus tels que les liaisons cardans P.176.50 pour les actionneurs de tilt 19 et P. 176.60 pour les bielles de liaison 15 commercialisés par la société PHYSIK INSTRUMENT (WALDBRONN, ALLEMAGNE).

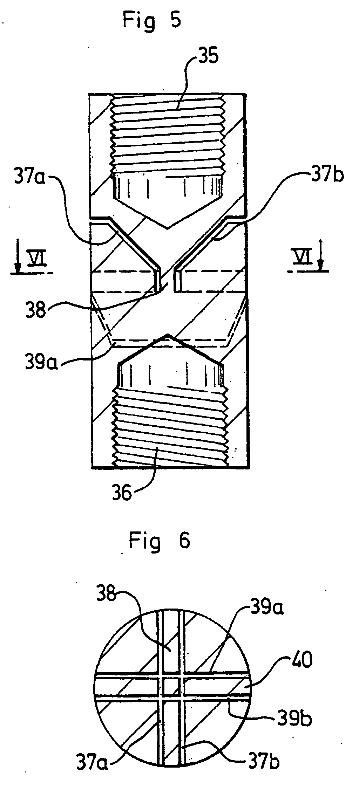

Ces blocs cylindriques sont représentés plus en détail figures 5 et 6. Ils comprennent deux taraudages borgnes d'extrémité 35, 36, coaxiaux, pour leur fixation aux pièces à relier (d'un côté à un plateau 12, 13, de l'autre à un actionneur 19 ou une bielle 15). Deux fentes 37a, 37b s'étendent de chaque côté d'une première épaisseur diamètre 38 selon des plans inclinés vers l'extérieur et vers le premier taraudage 35 jusqu'à la périphérie du bloc cylindrique. La même disposition se retrouve dans l'autre sens vers le deuxième taraudage 36 et à 90°. Deux fentes 39a, 39b (non visibles, uniquement en pointillés sur les figures) s'étendent de chaque côté d'une deuxième épaisseur diamétrale 40, selon des plans inclinés vers l'extérieur et vers le deuxième taraudage 36 jusqu'à la périphérie du bloc cylindrique. Les deux épaisseurs 38, 40 sont à 90° l'une de l'autre et forment une croix reliant les deux taraudages 35, 36 qui peuvent être inclinés légèrement l'un par rapport à l'autre par flexion de l'une et/ou de l'autre des épaisseurs 38, 40, selon la largeur des fentes 37a, 37b, 39a, 39b.

De telles liaisons sont exemptes de pièces en mouvement relatif et ne sont pas sujettes aux usures. Elles sont compatibles avec un embarquement à bord d'un engin spatial. Il en va de même des actionneurs linéaires piézoélectriques qui sont exempts de pièces à frottement dynamique.

Le dispositif 9 selon l'invention comprend également un étage de refocalisation 14 qui permet d'ajuster la position du plateau support 13 par rapport au support 8 en translation le long de l'axe 10 de référence. Cet étage de refocalisation 14 comprend un actionneur de refocalisation 27 qui peut être identique aux actionneurs de tilt 19, c'est-à-dire un actionneur linéaire piézoélectrique simple action à rappel élastique à déplacement amplifié, et sans jeu. L'actionneur 27 est fixé au centre du support 8 d'un côté par articulation inférieure 32, et de l'autre côté par une articulation supérieure 33, à une potence 28 solidaire du plateau support 13 et s'étendant entre le plateau miroir 12 et le plateau support 13 entre les bielles de liaison 15 et les actionneurs de tilt 19, en partie centrale axiale. Grâce à cette potence 28, l'actionneur de refocalisation 27 est disposé entre les deux plateaux 12, 13 et l'encombrement axial du dispositif 9 est réduit.

La potence 28 est un disque radial relié au plateau support 13 par trois montants 30. Le plateau support 13 est percé en son centre d'une lanière 31 pour le passage de l'articulation inférieure 32 de l'actionneur de refocalisation 27 et sa fixation au support 8. Sur la figure 4, la potence 28 n'est pas représentée pour illustrer les montants 3a et l'actionneur de refocalisation 27.

Les articulations inférieures 32 et supérieure 33 de l'actionneur de refocalisation 27 peuvent être semblables à celles 1-, 17, 20, 21 des bielles de liaison 15 et actionneurs de tilt 19, c'est-à-dire des joints de cardan formés de blocs fendus (figures 5 et 6).

Par ailleurs, le plateau support 13 est maintenu et centré par rapport au support 8 grâce à deux couronnes 29 métalliques qui s'étendent radialement entre le support 8 et le plateau de support 13 en étant fixées rigidement au support 8 et au plateau support 13 par des couronnes ou plateaux entretoises et vis appropriés comme représenté figure 3. Le plateau support 13 présente une jupe périphérique 41 pour venir coiffer un rétrécissement 42 du support 8 entre lesquelles les couronnes 39 sont placées. Ces couronnes 29 autorisent un déplacement axial relatif du plateau support 13 par rapport au support 8 mais réalisent un maintien radial, en torsion et en basculement de ces deux pièces l'une par rapport à l'autre.

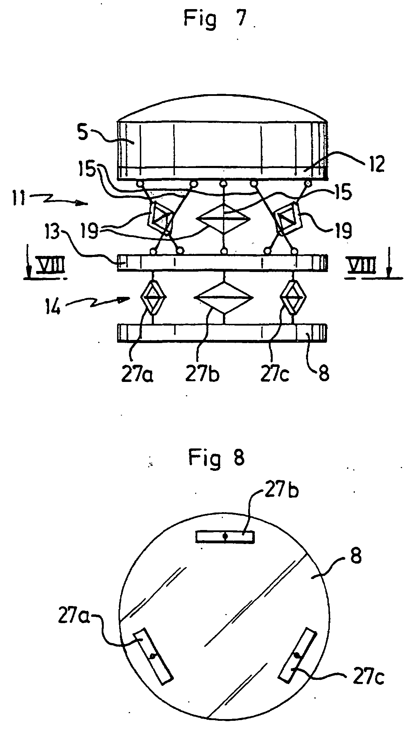

Dans la variante des figures 7 et 8, l'étage de refocalisation 14 est adapté pour permettre des translations perpendiculairement à l'axe 10 de référence. L'étage de refocalisation 14 comprend plusieurs actionnaires de refocalisation 27a, 27b, 27c non confondus à l'axe 10 de référence mais parallèles à cet axe 10 de référence de façon à pouvoir induire des basculements du plateau support 12 par rapport au support 8. Dans l'exemple, l'étage de refocalisation 14 comprend trois actionneurs de refocalisation 27a, 27b, 27c répartis autour de l'axe 10 de référence. Ce mode de réalisation permet de réaliser cinq degrés de liberté (les trois degrés de liberté en tilts et refocalisation comme précédemment plus deux translations radiales à l'axe 10) sur le dispositif 9 selon l'invention. Il est à noter que l'actionnement de l'un des actionneurs 27a seulement entraîne un basculement du plateau support 8, et donc un mouvement de translation radiale perpendiculaire à l'axe 10 et un mouvement de tilt, ce dernier pouvant être compensé par les autres actionneurs de refocalisation 27b, 27c et par l'étage de correction en tilt 11 de façon simple.

Dans le mode de réalisation préférentiel représenté sur les figures 3 et 4, l'axe de l'actionneur de refocalisation 27 unique coïncide avec l'axe 10 de référence.

### EXEMPLE :

Le montage est celui des figures 3 et 4.

On a utilisé des actionneurs 19, 27 APA 120 ML comrnercialisés par CEDRAT RECHERCHE, de caractéristiques suivantes :
- course à vide : 120 µm,
- effort maximum : 1 400 N,
- raideur : 11,7 N/µm,
- encombrement : 45 x 79 x 20 mm,
- masse : 160 g.

Les bielles de liaison 15 sont des barres d'acier de 8 mm de diamètre et 25 mm de longueur, de 400 N/µm de raideur. Les couronnes 29 en aluminium ont une épaisseur de 0,5 mm, une largeur de 10 mm pour un diamètre moyen de 150 mm. Elles sont écartées de 20 mm l'une de l'autre axialement. On obtient une raideur axiale de l'ordre de 9 N/µm pour un effort maximum de 2 215 N (sur la base d'une contrainte maximale prise à 195 MPa soit 75 % de la limite élastique), une raideur en flexion du plateau support 13 par rapport au support 8 de l'ordre de 300 000 Nm/rad pour un effort maximum de 4 250 Nm, et une raideur transversale de l'ordre de 2 450 N/µm, pour un effort maximum de 68 373 N.

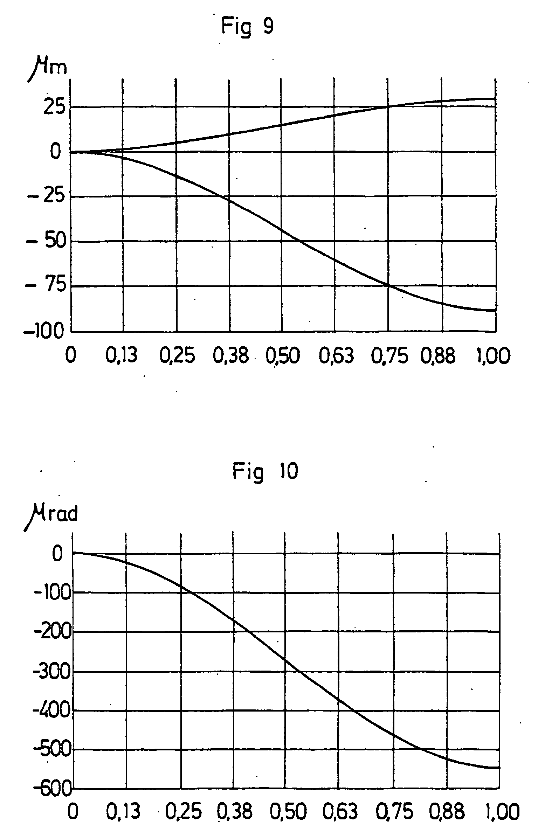

Les figures 9 à 12 représentent les résultats pouvant être obtenus.

La figure 9 représente la variation au cours du temps des courses des actionneurs de tilt 19 lorsqu'un seul des trois actionneurs de tilt 19 est alimenté. Ce dernier présente une course négative de l'ordre de 90 µm et les deux autres présentent une course positive (en allongement) de l'ordre de 30 µm.

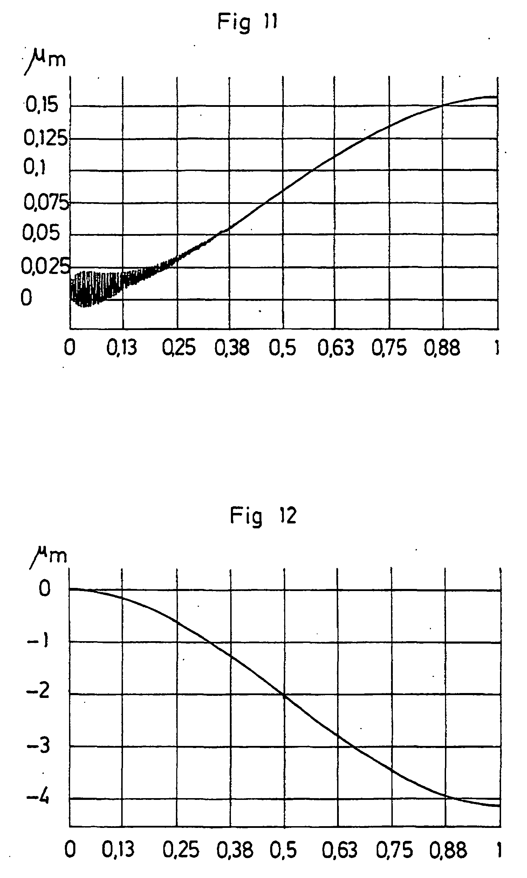

La figure 10 représente la variation au cours du temps de la course angulaire de pivotement obtenue sur le miroir secondaire 5 (en microradians). Comme on le voit, on peut obtenir une course angulaire de 540 µrad à partir de la position nominale dans un sens ou dans un autre. Il est à noter en outre que lorsque les différents actionneurs de tilt 19 ne sont pas alimentés, les deux plateaux 12, 13 reviennent en position nominale parallèles l'un à l'autre. La figure 11 représente les déplacements latéraux induits selon la direction latérale orthogonale à l'axe de référence 10 et à l'axe autour duquel le pivotement du miroir 5 a été réalisé. Comme on le voit, les réjections latérales atteignent une valeur de l'ordre de 0,15 µm au maximum de la course et sont donc négligeables en pratique.

La figure 12 représente les déplacements axiaux induits par le pivotement en tilt, c'est-à-dire les réjections axiales selon l'axe de référence 10. A la course de tilt maximum, la réjection axiale est de l'ordre de 4,2 µ. Cette réjection peut être facilement corrigée grâce à l'étage de refocalisation 14.

Compte tenu de la raideur des couronnes 29, la course maximum de l'actionneur de refocalisation 27 est de 68 µm, ce qui suffit notamment à compenser les réjections axiales. Les actionneurs de tilt 19 travaillent sur à peine les 3/4 de leur course à vide.

Ce comportement dynamique du montage a aussi été évalué. Avec un miroir de 3 kg, des actionneurs de 160 g, des bielles de liaison de 50 g, des couronnes de 15 g, des articulations cardans de 15 g, et des plateaux 8, 12, 13 de 500 g, en appliquant un échelon d'effort au centre de gravité du miroir suivant chacune des trois directions de l'espace.

Tous les modes propres apparaissant sont à une fréquence supérieure à 150 Hz. La plus faible, à 195 Hz, est un mode de torsion de l'ensemble autour de l'axe de référence 10. Le dispositif selon l'invention est donc assez raide pour subir les contraintes d'un lancement spatial (modes supérieurs à 100 Hz) et les microvibrations en fonctionnement en vol (modes supérieurs à 150 Hz).

L'invention peut faire l'objet de nombreuses variantes et applications autres que celles décrites ci-dessus à titre d'exemple. Elle s'applique en particulier à d'autres systèmes optiques que les télescopes Cassegrain, par exemple les télescopes Newton ou les systèmes optiques à plusieurs miroirs secondaires (interférences, ...), dans les engins spatiaux ou sur sites terrestres.

## Revendications

1. Dispositif de montage et de correction de la position par rapport à un support (8) d'un miroir (5),.présentant un axe optique central (ZZ') et un centre optique (O) comprenant un mécanisme (11, 14) à actionneurs (19, 27) motorisés s'étendant dans l'ombre du miroir (5) entre le support (8) et une face postérieure (34) du miroir (5), **caractérisé en ce qu'**il comprend un étage (11) de correction en tilt(s) s'étendant entre deux plateaux (12, 13), dont l'un, dit plateau miroir (12), est associé au miroir (5), tandis que l'autre, dit plateau support (13), est associé au support (8), et comportant :
- au moins deux bielles rigides, dites bielles de liaison (15), reliant les deux plateaux (12, 13), chacune de ces bielles de liaison (15) étant fixée par une articulation (16) de l'une de ses extrémités au plateau miroir (12) et une autre articulation (17) de son autre extrémité au plateau support (13), les bielles de liaison (15) étant fixées aux plateaux (12, 13) de façon à s'étendre entre les deux plateaux (12, 13) et lorsque les deux plateaux sont dans une position relative, dite position nominale, dans laquelle l'axe optique central du miroir (5) coïncide avec une direction fixe, dite axe (10) de référence, avec les directions droites, dites axes (18) de bielle, passant chacune par les deux articulations (16, 17) des extrémités de chaque bielle de liaison (15) qui sont sécantes au moins sensiblement au centre optique (O) du miroir (5),
- au moins un actionneur linéaire, dit actionneur de tilt (19), interposé entre les deux plateaux (12, 13) et fixé par une articulation (20) de l'une de ses extrémités au plateau miroir (12) et par une autre articulation (21) de son autre extrémité au plateau support (13), chaque actionneur de tilt (19) étant fixé aux plateaux (12, 13) et étant adapté pour que, lorsqu'au moins un actionneur de tilt (19) est activé, la distance entre ses extrémités (20, 21) étant modifiée, le plateau miroir (12) s'incline par rapport au plateau support (13), le miroir (5) pivotant au moins sensiblement autour de son centre optique (O).

2. Dispositif selon la revendication 1, **caractérisé en ce que** les bielles de liaison (15) sont articulées au voisinage de la périphérie du plateau support (13).

3. Dispositif selon l'une des revendications 1 ou 2, **caractérisé en ce que** chaque actionneur de tilt (19) est articulé au voisinage de la périphérie du plateau miroir (12).

4. Dispositif selon l'une des revendications 1 à 3, **caractérisé en ce qu'**il comprend trois bielles de liaison (15) uniformément réparties autour de l'axe (10) de référence et de l'axe optique central (ZZ').

5. Dispositif selon l'une des revendications 1 à 4, **caractérisé en ce qu'**il comprend au moins deux actionneurs (20, 21) de tilt (19) disposés de telle sorte que les axes, dits axes (22) d'actionneurs, passant chacun par les deux articulations d'extrémité d'un actionneur de tilt (19) et l'axe (10) de référence ne soient pas coplanaires.

6. Dispositif selon l'une des revendications 1 à 5, **caractérisé en ce qu'**il comprend trois actionneurs de tilt (19) uniformément répartis autour de l'axe (10) de référence.

7. Dispositif selon les revendications 5 et 6, **caractérisé en ce que** les trois actionneurs de tilt (19) sont disposés entre les trois bielles de liaison (15), chaque actionneur de tilt (19) étant interposé entre deux bielles de liaison (15) au moins sensiblement à égale distance de ces deux bielles de liaison (15) adjacentes.

8. Dispositif selon l'une des revendications 1 à 7, **caractérisé en ce que** chaque actionneur de tilt (19) est un actionneur simple effet moteur dans un sens de translation par rapport à l'axe (22) d'actionneur et comprend des moyens (25) de rappel élastique dans l'autre sens de translation.

9. Dispositif selon la revendication 8, **caractérisé en ce que** chaque actionneur de tilt (19) est moteur dans le sens du rapprochement de ses deux extrémités d'articulation (20, 21).

10. Dispositif selon l'une des revendications 1 à 9, **caractérisé en ce que** chaque actionneur de tilt (19) est un actionneur piézoélectrique à déplacement amplifié.

11. Dispositif selon l'une des revendications 1 à 10, **caractérisé en ce que** les articulations (16, 17) de chaque bielle de liaison (15) aux plateaux (12, 13) sont de types joints de cardan autorisant des pivotements de modification d'inclinaison de l'axe (18) de bielle par rapport aux plateaux (12, 13) mais interdisant des rotations relatives autour de l'axe (18) de bielle.

12. Dispositif selon l'une des revendications 1 à 11, **caractérisé en ce que** les articulations (20, 21) de chaque actionneur de tilt (19) aux plateaux (12, 13) sont de types joints de cardan autorisant des pivotements de modification d'inclinaison de l'axe (22) d'actionneur par rapport aux plateaux (12, 13), mais interdisant des rotations relatives autour de l'axe (22) d'actionneur.

13. Dispositif selon l'une des revendications 1 à 12, **caractérisé en ce que** chaque bielle de liaison (15) est une tige droite rigide.

14. Dispositif selon l'une des revendications 1 à 13, **caractérisé en ce qu'**il comprend en outre un étage, dit étage de refocalisation (14), de correction de la position plateau support (13) en translation le long de l'axe (10) de référence, et/ou en translation perpendiculairement à cet axe (10) de référence.

15. Dispositif selon la revendication 14, **caractérisé en ce que** l'étage de refocalisation (14) est adapté pour n'autoriser qu'une translation du plateau support (13) le long de l'axe (10) de référence.

16. Dispositif selon l'une des revendications 14 ou 15, **caractérisé en ce que** l'étage de refocalisation (14) comprend au moins un actionneur linéaire, dit actionneur de refocalisation (27), s'étendant parallèlement à l'axe (10) de référence entre le plateau support (13) et le support (8).

17. Dispositif selon la revendication 16, **caractérisé en ce que** l'étage de refocalisation (14) comprend plusieurs actionneurs de refocalisation (27a, 27b, 27c) aptes à réaliser des translations selon des directions parallèles à l'axe (10) de référence mais non confondus à cet axe (10) de référence, de façon à permettre des translations du plateau support (13) perpendiculairement à l'axe (10) de référence.

18. Dispositif selon la revendication 17, **caractérisé en ce qu'**il comprend trois actionneurs de refocalisation (27a, 27b, 27c) régulièrement répartis autour de l'axe (10) de référence.

19. Système optique comprenant au moins un miroir (5) à axe optique central (ZZ') et centre optique (O) et au moins un support (8) d'un tel miroir (5), **caractérisé en ce qu'**il comprend au moins un dispositif selon l'une des revendications 1 à 8 de montage et de correction de la position d'un miroir (5) par rapport à un support (8).

20. Système optique selon la revendication 19, **caractérisé en ce qu'**il s'agit d'un télescope spatial Cassegrain.

## Patentansprüche

1. Vorrichtung zum Montieren und Korrigieren der Position eines Spiegels (5) in Bezug auf dessen Tragvorrichtung (8), mit einer mittleren optischen Achse (ZZ') und einem optischen Mittelpunkt (O), umfassend einen Mechanismus (11, 14) mit motorgetriebenen Aktuatoren (19, 27), die im Schatten des Spiegels (5) zwischen der Tragvorrichtung (8) und einer Rückseite (34) des Spiegels (5) verlaufen, **dadurch gekennzeichnet, dass** sie eine Kippkorrekturstufe (11) umfasst, die zwischen zwei Platten (12, 13) verläuft, von denen die eine, Spiegelplatte (12) genannt, mit dem Spiegel (5) assoziiert ist, während die andere, Tragplatte (13) genannt, mit der Tragvorrichtung (8) assoziiert ist, und die Folgendes umfasst:
- wenigstens zwei starre Zwischenglieder, Verbindungsglieder (15) genannt, die die beiden Platten (12, 13) verbinden, wobei jedes dieser Verbindungsglieder (15) durch ein Gelenk (16) an einem seiner Enden mit der Spiegelplatte (12) und durch ein anderes Gelenk (17) an seinem anderen Ende mit der Tragplatte (13) verbunden ist, wobei die Verbindungsglieder (15) so an den Platten (12, 13) befestigt sind, dass sie zwischen den beiden Platten (12, 13) verlaufen und, wenn die beiden Platten in einer relativen Position, Nennposition genannt, liegen, in der die mittlere optische Achse des Spiegels (5) mit einer festen Richtung zusammenfällt, Referenzachse (10) genannt, mit den geraden Richtungen, Gliedachsen (18) genannt, so, dass diese jeweils durch die beiden Gelenke (16, 17) der Enden jedes Verbindungsglieds (15) passieren, die sich wenigstens im Wesentlichen im optischen Mittelpunkt (O) des Spiegels (5) schneiden,
- wenigstens einen linearen Aktuator, Kippaktuator (19) genannt, der zwischen den beiden Platten (12, 13) angeordnet ist und durch ein Gelenk (20) an einem Ende an der Spiegelplatte (12) und durch ein weiteres Gelenk (21) an seinem anderen Ende an der Tragplatte (13) befestigt ist, wobei jeder Kippaktuator (19) an den Platten (12, 13) befestigt und so gestaltet ist, dass, wenn wenigstens ein Kippaktuator (19) aktiviert wird, der Abstand zwischen seinen Enden (20, 21) modifiziert wird, wobei die Spiegelplatte (12) in Bezug auf die Tragplatte (13) geneigt ist, wobei der Spiegel (5) wenigstens im Wesentlichen um seinen optischen Mittelpunkt (O) schwenkt.

2. Vorrichtung nach Anspruch 1, **dadurch gekennzeichnet, dass** die Verbindungsglieder (15) in der Nähe des Umfangs der Tragplatte (13) angelenkt sind.

3. Vorrichtung nach Anspruch 1 oder 2, **dadurch gekennzeichnet, dass** jeder Kippaktuator (19) in der Nähe des Umfangs der Spiegelplatte (12) angelenkt ist.

4. Vorrichtung nach einem der Ansprüche 1 bis 3, **dadurch gekennzeichnet, dass** sie drei gleichmäßig um die Referenzachse (10) und die optische Mittelpunktachse (ZZ') verteilte Verbindungsglieder (15) umfasst.

5. Vorrichtung nach einem der Ansprüche 1 bis 4, **dadurch gekennzeichnet, dass** sie wenigstens zwei Aktuatoren (20, 21) zum Kippen (19) umfasst, die so angeordnet sind, dass die Achsen, Aktuatorachsen (22) genannt, die jeweils durch die beiden Endgelenke eines Kippaktuators (19) verlaufen, und die Referenzachse (10) nicht koplanar sind.

6. Vorrichtung nach einem der Ansprüche 1 bis 5, **dadurch gekennzeichnet, dass** sie drei Kippaktuatoren (19) umfasst, die gleichmäßig um die Referenzachse (10) verteilt sind.

7. Vorrichtung nach den Ansprüchen 5 und 6, **dadurch gekennzeichnet, dass** die drei Kippaktuatoren (19) zwischen den drei Verbindungsgliedern (15) angeordnet sind, wobei sich jeder Kippaktuator (19) zwischen zwei Verbindungsgliedern (15) wenigstens im Wesentlichen im gleichen Abstand von diesen benachbarten Verbindungsgliedern (15) befindet.

8. Vorrichtung nach einem der Ansprüche 1 bis 7, **dadurch gekennzeichnet, dass** jeder Kippaktuator (19) ein einfach wirkender Stellmotor in einer Translationsrichtung in Bezug auf die Aktuatorachse (22) ist und Mittel (25) zum elastischen Rückstellen in der anderen Translationsrichtung umfasst.

9. Vorrichtung nach Anspruch 8, **dadurch gekennzeichnet, dass** jeder Kippaktuator (19) in der Annäherungsrichtung seiner beiden Gelenkenden (20, 21) antreibt.

10. Vorrichtung nach einem der Ansprüche 1 bis 9, **dadurch gekennzeichnet, dass** jeder Kippaktuator (19) ein piezoelektrischer Aktuator mit Bewegungsverstärkung ist.

11. Vorrichtung nach einem der Ansprüche 1 bis 10, **dadurch gekennzeichnet, dass** die Gelenke (16, 17) jedes Verbindungsgliedes (15) mit den Platten (12, 13) vom Kardangelenktyp ist, der Schwenkungen zum Ändern der Neigung der Gliedachse (18) in Bezug auf die Platten (12, 13) zulässt, aber relative Rotationen um die Gliedachse (18) verhindert.

12. Vorrichtung nach einem der Ansprüche 1 bis 11, **dadurch gekennzeichnet, dass** die Gelenke (20, 21) jedes Kippaktuators (19) mit den Platten (12, 13) vom Kardangelenktyp sind, der Schwenkungen zum Ändern der Neigung der Aktuatorachse (22) in Bezug auf die Platten (12, 13) zulässt, aber relative Rotationen um die Aktuatorachse (22) verhindert.

13. Vorrichtung nach einem der Ansprüche 1 bis 12, **dadurch gekennzeichnet, dass** jedes Verbindungsglied (15) eine starre gerade Stange ist.

14. Vorrichtung nach einem der Ansprüche 1 bis 13, **dadurch gekennzeichnet, dass** sie darüber hinaus eine Stufe, Umfokussierstufe (14) genannt, zum Korrigieren der Position der Tragplatte (13) translational entlang der Referenzachse (10) und/oder translational lotrecht zu dieser Referenzachse (10) umfasst.

15. Vorrichtung nach Anspruch 14, **dadurch gekennzeichnet, dass** die Umfokussierstufe (14) so gestaltet ist, dass sie lediglich eine Translation der Tragplatte (13) entlang der Referenzachse (10) zulässt.

16. Vorrichtung nach Anspruch 14 oder 15, **dadurch gekennzeichnet, dass** die Umfokussierstufe (14) wenigstens einen linearen Aktuator umfasst, Umfokussieraktuator (27) genannt, der parallel zur Referenzachse (10) zwischen der Tragplatte (13) und der Tragvorrichtung (8) verläuft.

17. Vorrichtung nach Anspruch 16, **dadurch gekennzeichnet, dass** die Umfokussierstufe (14) mehrere Umfokussieraktuatoren (27a, 27b, 27c) umfasst, deren Aufgabe es ist, Translationsbewegungen in Richtungen parallel zur Referenzachse (10), aber nicht mit dieser Referenzachse (10) zusammenfallend zu realisieren, um Translationsbewegungen der Tragplatte (13) lotrecht zu der Referenzachse (10) zuzulassen.

18. Vorrichtung nach Anspruch 17, **dadurch gekennzeichnet, dass** sie drei Umfokussieraktuatoren (27a, 27b, 27c) umfasst, die gleichmäßig um die Referenzachse (10) verteilt sind.

19. Optisches System, umfassend wenigstens einen Spiegel (5) mit einer mittleren optischen Achse (ZZ') und einem optischen Mittelpunkt (O) und wenigstens eine Tragvorrichtung (8) eines solchen Spiegels (5), **dadurch gekennzeichnet, dass** es wenigstens eine Vorrichtung nach einem der Ansprüche 1 bis 8 zum Montieren und Korrigieren der Position eines Spiegels (5) in Bezug auf eine Tragvorrichtung (8) umfasst.

20. Optisches System nach Anspruch 19, **dadurch gekennzeichnet, dass** es sich um ein räumliches Cassegrain-Teleskop handelt.

## Claims

1. Device for mounting and correcting the position with reference to a support (8) of a mirror (5) which has a central optical axis (ZZ') and an optical centre (O), comprising a mechanism (11, 14) including motorised actuators (19, 27) and extending in the shadow of the mirror (5) between the support (8) and a rear face (34) of the mirror (5), **characterised in that** it includes a tilt(s) correction stage (11) extending between two plates (12, 13), one of which, called the mirror plate (12), is associated with the mirror (5) while the other, called the support plate (13), is associated with the support (8), and including:
- at least two rigid rods, called link rods (15), connecting the two plates (12, 13), each of said link rods (15) being attached by a joint (16) at one of its ends to the mirror plate (12) and by another joint (17) at its other end to the support plate (13), the link rods (15) being attached to the plates (12, 13) so as to extend between the two plates (12, 13), and with the rectilinear directions, called the rods axes (18), passing in each case through the two joints (16, 17) at the ends of each link rod (15), which are at least substantially secant to the optical centre (O) of the mirror (5) when the two plates are in a relative position, called the nominal position, in which the central optical axis of the mirror (5) coincides with a fixed direction, called the reference axis (10), and
- at least one linear actuator, called the tilt actuator (19), interposed between the two plates (12, 13) and attached by a joint (20) at one of its ends to the mirror plate (12) and by a joint (21) at its other end to the support plate (13), each tilt actuator (19) being attached to the plates (12, 13) and being so adapted that, when at least one tilt actuator (19) is activated, the distance between its ends (20, 21) being modified, the mirror plate (12) is inclined with respect to the support plate (13), the mirror (5) pivoting at least substantially around its optical centre (O).

2. Device according to claim 1, **characterised in that** the link rods (15) are articulated in the vicinity of the periphery of the support plate (13).

3. Device according to either of claims 1 and 2, **characterised in that** each tilt actuator (19) is articulated in the vicinity of the periphery of the mirror plate (12).

4. Device according to any one of claims 1 to 3, **characterised in that** it includes three link rods (15) distributed uniformly around the reference axis (10) and the central optical axis (ZZ').

5. Device according to any one of claims 1 to 4, **characterised in that** it includes at least two tilt (19) actuators (20, 21) so disposed that the axes, called the actuator axes (22), each passing through the two end joints of a tilt actuator (19) and the reference axis (10), are not coplanar.

6. Device according to any one of claims 1 to 5, **characterised in that** it includes three tilt actuators (19) distributed uniformly around the reference axis (10).

7. Device according to claims 5 and 6, **characterised in that** the three tilt actuators (19) are disposed between the three link rods (15), each tilt actuator (19) being interposed between two link rods (15) at least substantially equidistantly from said two adjacent link rods (15).

8. Device according to any one of claims 1 to 7, **characterised in that** each tilt actuator (19) is an actuator having a single driving effect in a translatory direction with respect to the actuator axis (22) and including elastic return means (25) in the other translatory direction.

9. Device according to claim 8, **characterised in that** each tilt actuator (19) drives in the direction in which its two end joints (20, 21) move towards one another.

10. Device according to any one of claims 1 to 9, **characterised in that** each tilt actuator (19) is a piezoelectric actuator having amplified displacement.

11. Device according to any one of claims 1 to 10, **characterised in that** the joints (16, 17) connecting each link rod (15) to the plates (12, 13) are types of universal joint which allow pivoting which modifies the inclination of the rod axis (18) with respect to the plates (12, 13) but which prevent relative rotation around the rod axis (18).

12. Device according to any one of claims 1 to 11, **characterised in that** the joints (20, 21) connecting each tilt actuator (19) to the plates (12, 13) are types of universal joint which allow pivoting which modifies the inclination of the actuator axis (22) with respect to the plates (12, 13) but which prevent relative rotation around the actuator axis (22).

13. Device according to any one of claims 1 to 12, **characterised in that** each link rod (15) is a straight rigid bar.

14. Device according to any one of claims 1 to 13, **characterised in that** it includes in addition a stage, called the refocusing stage (14), for correcting the position of the support plate (13) in translation along the reference axis (10), and/or in translation perpendicularly to said reference axis (10).

15. Device according to claim 14, **characterised in that** the refocusing stage (14) is adapted to permit only translation of the support plate (13) along the reference axis (10).

16. Device according to either of claims 14 and 15, **characterised in that** the refocusing stage (14) includes at least one linear actuator, called the refocusing actuator (27), extending parallel to the reference axis (10) between the support plate (13) and the support (8).

17. Device according to claim 16, **characterised in that** the refocusing stage (14) includes a plurality of refocusing actuators (27a, 27b, 27c) able to perform translatory motions in directions parallel to the reference axis (10) but not coinciding with said reference axis (10), so as to permit translatory movements of the support plate (13) perpendicularly to the reference axis (10).

18. Device according to claim 17, **characterised in that** it includes three refocusing actuators (27a, 27b, 27c) distributed regularly around the reference axis (10).

19. Optical system comprising at least one mirror (5) having a central optical axis (ZZ') and an optical centre (O) and at least one support (8) of such a mirror (5), **characterised in that** it includes at least one device according to any one of claims 1 to 8 for mounting and correcting the position of a mirror (5) with reference to a support (8).

20. Optical system according to claim 19, **characterised in that** it is a Cassegrain space telescope.
